# EUROPÄISCHE PATENTANMELDUNG

(11) **EP 1 383 058 A1**
(43) Veröffentlichungstag der Anmeldung: **21.01.2004**
(21) Anmeldenummer: 02015935.6
(22) Anmeldetag: 17.07.2002
(51) Int. Cl.: G06F 17/60

(54) **Verfahren zur Durchführung von Kauftransaktionen in einem Rechnernetzwerk**

(71) Anmelder: AGP Bauzentrum Wernigerode GmbH & Co. Handels KG, 38855 Wernigerode (DE)
(72) Erfinder: Meier, Christoph, 38304 Wolfenbüttel (DE); Stiller, Jan, 91052 Erlangen (DE)
(74) Vertreter: Tergau & Pohl Patentanwälte

(57) **Zusammenfassung**

Die Erfindung betrifft ein Verfahren zur Durchführung von Kauftransaktionen in einem Rechnernetzwerk (400) sowie ein System (500), eine Vorrichtung (600) und ein Computerprogrammprodukt (605) zur Durchführung des Verfahrens. Um Kauftransaktionen besonders einfach und kundenfreundlich abzuwickeln wird ein Verfahren mit den folgenden Schritten vorgeschlagen: Empfangen (105) eines ersten Datensatzes (200) über das Rechnernetzwerk (400), der eine Anzahl von Transaktionsparametern (202) einschließlich eines ersten Entscheidungswertes (205) umfasst; automatisches Prüfen des ersten Datensatzes (200), umfassend das Ermitteln (108) eines zweiten Entscheidungswertes aus den Transaktionsparametern (202) des ersten Datensatzes (200) sowie Ermitteln (109) eines Ergebnissignals aus einem Vergleich des ersten Entscheidungswertes (205) mit dem zweiten Entscheidungswert; Erstellen (110) eines zweiten Datensatzes (300), dessen Inhalt von dem Ergebnissignal abhängt; und Senden (112) des zweiten Datensatzes (300) über das Rechnernetzwerk (400).

## Beschreibung

Die Erfindung betrifft ein Verfahren zur Durchführung von Kauftransaktionen in einem Rechnernetzwerk sowie ein System, eine Vorrichtung und ein Computerprogrammprodukt zur Durchführung des Verfahrens.

Die Bedeutung des elektronischen Handels in Rechnemetzen, insbesondere im Internet, wächst von Jahr zu Jahr. Dabei werden sowohl Waren als auch Dienstleistungen zum Erwerb angeboten. Die Verkäufe können dabei sowohl von einem Händler an einen Privatkunden oder aber von Händler zu Händler erfolgen.

Es sind elektronische Marktplätze bekannt, auf denen der Handel nach einem Auktionsmodell erfolgt. Bei einem dieser Modelle ändert sich beispielsweise der Preis der zu handelnden Ware oder Dienstleistung in Abhängigkeit von der Anzahl der Kaufinteressenten. Nachteilig bei den Auktionsmodellen ist, dass weder Käufer noch Verkäufer wissen, ob die Ware oder Dienstleistung schlussendlich zu einem bestimmten Preis verkauft werden wird.

Darüber hinaus ist es bekannt, Kunden als Kaufanreiz Rabatte einzuräumen. Die Rabatte werden dabei üblicherweise an breite Kundengruppen verteilt. Da die derart angesprochenen Kunden häufig kein Interesse an den mit Rabatt angebotenen Waren oder Dienstleistungen haben, ist diese Art des Rabatt-Angebotes sehr ineffektiv.

Der Erfindung liegt die Aufgabe zugrunde, ein Verfahren zur Durchführung von Kauftransaktionen in einem Rechnernetzwerk zur Verfügung zu stellen, das eine Kauftransaktion einfach und kundenfreundlich abwickelt. Diese Aufgabe wird durch ein Verfahren nach Anspruch 1 bzw. durch ein System nach Anspruch 13 bzw. eine Vorrichtung nach Anspruch 19 bzw. ein Computerprogrammprodukt nach Anspruch 21 gelöst.

Das erfindungsgemäße Verfahren umfasst dabei die folgenden Schritte: Empfangen eines ersten Datensatzes über das Rechnernetzwerk, der eine Anzahl von Transaktionsparametem einschliesslich eines ersten Entscheidungswertes umfasst; automatisches Prüfen des ersten Datensatzes, umfassend das Ermitteln eines zweiten Entscheidungswertes unter Verwendung der Transaktionsparameter des ersten Datensatzes sowie Ermitteln eines Ergebnissignals aus einem Vergleich des ersten Entscheidungswertes mit dem zweiten Entscheidungswert; Erstellen eines zweiten Datensatzes, dessen Inhalt von dem Ergebnissignal abhängt; und Senden des zweiten Datensatzes über das Rechnemetzwerk.

Das Verfahren läuft dabei auf einer oder mehreren Händlerstationen ab, die zusammen mit einer Anzahl von Kundenstationen an das Rechnernetzwerk angeschlossen sind. Von Vorteil dabei ist, dass der Kunde dem Händler durch das Versenden des ersten Datensatzes an eine Händlerstation sämtliche aus seiner Sicht für die Durchführung der Kauftranskation relevanten Daten, nämlich die Transaktionsparamter, zur Verfügung stellt. Diese Transaktionsparameter umfassen wenigstens einen Entscheidungswert. Anhand des Entscheidungswertes entscheidet sich der Kunde zur Durchführung der Kauftransaktion. Diese Daten durchlaufen einen automatischen Prüfprozess, der vom Händler durchgeführt wird. Ein wesentlicher Punkt der Erfindung liegt darin, dass die Kauftransaktion selbständig und ohne weiteres Zutun des Kunden geprüft wird, wobei ein Ergebnissignal ermittelt wird. In Abhängigkeit vom Ergebnissignal wird anschliessend über den weiteren Ablauf der Transaktion entschieden. Das Verfahren arbeitet mit einer geringen Anzahl von Parametern, so dass eine einfache, transparente und besonders kundenfreundliche Abwicklung garantiert wird.

Ergibt das automatische Prüfen ein erstes Ergebnissignal, so wird entsprechend der Lehre des Anspruchs 2 die Kauftransaktion bestätigt, indem mit dem zweiten Datensatz, der als Antwort des Händlers an den Kunden dient, eine Bestätigung an den Kunden verschickt wird. Die Bestätigung umfasst vorzugsweise das Ergebnissignal und/oder den ersten Entscheidungswert. Eine Bestätigung wird immer dann verschickt, wenn der aus dem Inhalt des ersten Datensatzes ermittelte zweite Entscheidungswert mit dem ersten Entscheidungswert übereinstimmt bzw. lediglich um einen bestimmten Differenzwert davon abweicht. Die Größe des Differenzwertes kann dabei vorgegeben sein. Sie kann jedoch auch aus dem Inhalt des ersten Datensatzes ermittelt oder aus einer Datenbank geladen werden.

Ergibt das automatische Prüfen ein zweites Ergebnissignal, das von dem ersten Ergebnissignal verschieden ist, wird nach der Lehre des Anspruchs 3 der zweite Datensatz mit einem dritten Entscheidungswert versendet, wobei der dritte Entscheidungswert aus dem Ergebnis des Vergleiches und/oder den Transaktionsparametern des ersten Datensatzes ermittelt wird. Mit anderen Worten stellt der dritte Entscheidungswert einen vom Händler bestimmten Wert dar, der nunmehr an den kaufinteressierten Kunden gesendet wird. Durch diesen Automatismus erhält der Kunde ein seinen Transaktionsparametern angepasstes und daher individuell auf seine Kauftransaktion zugeschnittenes Angebot.

Nach der Lehre des Anspruchs 4 werden die ersten und/oder zweiten Datensätze in einer Datenbank gespeichert. Besonders vorteilhaft ist es, wenn der erste Datensatz sofort nach dem Empfangen in einer Datenbank abgelegt wird. Vorzugsweise umfasst zumindest der erste Datensatz den aktuellen Kaufpreis der Waren oder Dienstleistungen. Zur klaren Dokumentation der Kauftransaktion ist es von Vorteil, wenn der zum Zeitpunkt der Erstellung des ersten Datensatzes aktuelle Preis mit abgespeichert wird. Enthält der erste Datensatz den oder die Kaufpreise nicht, so wird der Kaufpreis in einer weiteren vorteilhaften Ausführungsform der Erfindung nachträglich ermittelt und gemeinsam mit dem ersten Datensatz abgespeichert. Durch das Abspeichern der Artikelpreise mit der Bestellung wird verhindert, dass eine Aktualisierung des Preises in der Angebotsdatenbank die Berechnungsgrundlagen des Angebots verändern.

Das Speichern der Datensätze erfolgt zum einen, um jederzeit einen Nachweis über die ausgetauschten Datensätze, d.h. also über die Kauftransaktion als ganzes und über sämtliche während der Kauftransaktion zwischen Kunde und Händler ausgetauschten Informationen zu besitzen. Zum anderen dienen die ersten und/oder zweiten Datensätze als Entscheidungsdaten (Anspruch 6), die zur Ermittlung des zweiten und/oder dritten Entscheidungswertes herangezogen werden (Anspruch 5). Damit ist es möglich, den im ersten Datensatz angegebenen Entscheidungswert nicht nur in Abhängigkeit von der aktuellen Transaktion des Kunden zu beurteilen und zu bewerten. Vielmehr können auch frühere Transaktionen dieses Kunden, eines anderen Kunden oder einer bestimmten Kundengruppe zur Ermittlung des zweiten und/oder dritten Entscheidungswertes herangezogen werden. Beispielsweise können einem Kunden, der in der Vergangenheit bereits mehrfach Waren oder Dienstleistungen in einem bestimmten Umfang gekauft hat, andere Entscheidungswerte angeboten werden, als beispielsweise einem Neukunden. Die Ergebnisse der Auswertung früherer Transaktionen kann auch zur Bestimmung des Differenzwertes bei dem Vergleich von erstem und zweitem Entscheidungswertes herangezogen werden. Die Entscheidungsdaten umfassen vorteilhafterweise Informationen, die nicht mit Transaktionsparametern der aktuellen oder früheren Transaktionen im Zusammenhang stehen. Beispielsweise können aktuelle Wechselkurse oder Zinssätze zur Bestimmung des zweiten und/oder dritten Entscheidungswertes verwendet werden. Herangezogen werden vorzugsweise auch mikrogeographische Daten, wie beispielsweise Kaufkraft, Wohnstruktur und Ausfallrisiko, wie sie beispielsweise anhand der in den Transaktionsparametern enthaltenen Angaben wie Postleitzahl oder der Rechnungsoder Lieferanschrift des Kunden ermittelt werden können. Ebenso können demographische Angaben zur Bestimmung wie z.B Alter oder Geschlecht herangezogen werden. Sämtliche Entscheidungsdaten können dabei unabhängig von der Art ihrer Erfassung verwendet werden. Es kann aber auch eine Gewichtung vorgenommen werden. Beispielsweise kann den vom Kunden selbst vorgenommenen Angaben eine höhere Gewichtung zugemessen werden als Angaben, die über Dritte, wie beispielsweise Informationsanbieter oder externe Datenbanken, gewonnen wurden.

Nach der Lehre des Anspruchs 7 umfasst der erste Datensatz eine Identifizierung der Kauftransaktion. Mit dieser Identifizierung, die vom Kunden selbst oder vom Händler vergeben werden kann, erfolgt eine Benennung der Kauftransaktion, anhand derer zu jedem beliebigen Zeitpunkt ein Wiederauffinden von zu der Transaktion gehörenden Datensätzen u.a. möglich ist.

Die im ersten Datensatz enthaltenen Transaktionsparameter umfassen darüber hinaus vorzugsweise eine Identifizierung des Kunden, insbesondere in Form einer Kundennummer (Anspruch 8). Diese dient beispielsweise zum Auffinden von Entscheidungsdaten bei der Berechnung des zweiten bzw. dritten Entscheidungswertes.

Weiterhin können als Transaktionsparameter im ersten Datensatz Liefertermin bzw. Lieferfrist und/oder Lieferort angegeben werden (Anspruch 9). Somit kann der zweite bzw. dritte Entscheidungswert in Abhängigkeit von der Lieferfähigkeit des Händlers bzw. den Transportkosten bestimmt werden. Soll die Lieferung an den Kunden beispielsweise "frei Haus" erfolgen, so können Speditionskosten und weitere Transportzusatzkosten wie Versicherungskosten oder Zollkosten berücksichtigt werden. Die entsprechenden Transportkosten können durch aus einer Datenbank abrufbare Transportkostenpauschalen für die Entscheidungswertermittlung zur Verfügung gestellt werden. In einem anderen Ausführungsbeispiel werden die Transportkosten individuell anhand der Transaktionsparameter der Kauftransaktion berechnet.

Nach der Lehre des Anspruchs 10 umfassen die Transaktionsparameter der ersten Datensatzes auch Artikeldaten, insbesondere Art und Anzahl der zu verkaufenden Artikel. Diese Artikeldaten umfassen vorteilhafterweise einen eindeutigen Artikelcode, beispielsweise eine Artikelnummer und eine Beschreibung des Artikels in Klartext.

Die zur automatischen Prüfung des ersten Datensatzes herangezogenen Transaktionsparameter werden dabei in der Regel vom Kunden selbst eingegeben. Die Eingabe kann dabei manuell oder aber automatisiert, beispielsweise durch einen Kundenagenten in Form einer spezialisierten Software, erfolgen. Jedoch kann beispielsweise vorgesehen sein, dass nach der Identifizierung eines Kunden, beispielsweise durch Eingabe seiner Kundenummer, bestimmte Transaktionsparameter vorgegeben werden. So kann vorgesehen sein, dass Stammkunden ein anderer Wertebereich von Entscheidungswerten zur Verfügung gestellt wird, als Neukunden. Es kann vorgesehen sein, dass der Kunde weitere allgemeine Transaktionsparameter, wie beispielsweise Familienstand, Haushaltseinkommen etc. im Rahmen einer Registrierung in einer im Rahmen der automatischen Prüfung abrufbaren Kundendatenbank angibt.

Vorteilhafterweise ist zusätzlich vorgesehen, dass der erste Datensatz Transaktionsparameter umfasst, die automatisch, vorzugsweise ohne dass der Kunde davon Kenntnis nimmt, in den ersten Datensatz aufgenommen werden. Beispielsweise kann die Art des vom Kunden verwendeten Netzwerkzugangs, feststellbar am Datenübertragungsweg oder aufgrund eines bestimmten Zugangsproviders, oder die Art der Email-Adresse des Kunden als relevante Information verwendet werden. Auch dieses Informationen werden vorteilhafterweise als Transaktionsparameter bei der Ermittlung des zweiten und/oder dritten Entscheidungswertes berücksichtigt. So können Zugang und Adressen beispielsweise anhand der Top-Level-Domain als beispielsweise einer Universität oder einem Unternehmen zugehörig bewertet werden.

Nach der Lehre des Anspruchs 11 umfasst das Verfahren als zusätzlichen Schritt das Bereitstellen von Transaktionsparametern, mit denen ein Kunde einen ersten Datensatz erstellen kann. Mit anderen Worten werden, beispielsweise in der Datenbank, auf die ein das Einkaufs-Portal bedienender Internet-Server zugreifen kann, Informationen in Form von Transaktionsparametern bereitgestellt, die ein Kunde zur Erstellung eines ersten Datensatzes verwenden kann.

Besonders vorteilhaft ist die Ausführungsform nach Anspruch 12, wonach der Entscheidungswert ein Rabattwert ist. Besonders vorteilhaft ist es, wenn der Rabattwert vom Kunden frei wählbar ist.

In dieser besonders bevorzugten Ausführungsform umfasst der vom Kunden erstellte erste Datensatz mit anderen Worten einen frei wählbaren Wunsch-Rabattwert. Der erstmalig versendete erste Datensatz stellt somit eine Kaufanfrage dar. Nachdem der erste Datensatz in der Händlerstation empfangen wurde, wird dieser Wunsch-Rabattwert erfindungsgemäß mit einem zweiten Rabattwert verglichen, der unter Verwendung des Inhalts des ersten Datensatzes ermittelt wird. Für den Fall, dass die Rabatt-Vorstellungen des Kunden nicht mit denen des Händlers übereinstimmen, wird automatisch ein dritter Rabattwert ermittelt, der als zweiter Datensatz, nämlich als ein Angebot des Händlers an den Kunden gesandt wird. Dieser kann nun auf den zweiten Datensatz reagieren, indem er einen neuen ersten Datensatz erstellt. In diesem neuen ersten Datensatz kann der Kunde wiederum einen neuen ersten Rabattwert angeben. Sinnvollerweise erfolgt die Angabe des neuen ersten Rabattwertes unter Berücksichtigung des dritten, vom Verkäufer angebotenen Rabattwertes. Der Kunde kann selbstverständlich aber auch den im zweiten Datensatz übermittelten dritten Rabattwert des Verkäufers akzeptieren, womit die Transaktion abgeschlossen wäre.

Die Erfindung stellt in Anspruch 13 weiterhin ein System zur Durchführung von Kauftransaktionen in einem Rechnemetzwerk zur Verfügung. Dieses System umfasst Mittel zum Empfangen eines ersten Datensatzes entsprechend Verfahrensschritt a) des Anspruchs 1 und zum Senden des zweiten Datensatzes entsprechend Verfahrensschritt d) des Anspruchs 1, nämlich ein Kommunikationsmodul; Mittel zum automatischen Prüfen des ersten Datensatzes entsprechend Verfahrensschritt b) des Anspruchs 1, nämlich ein Verarbeitungsmodul; sowie Mittel zum Erstellen eines zweiten Datensatzes entsprechend Verfahrensschritt c) des Anspruchs 1, nämlich ein Antwortmodul. Sämtliche Module des Systems sind vorzugsweise als Bestandteile eines digitalen Rechnersystems implementiert. Die vorliegende Erfindung kann dabei in Hardware, Software oder einer Kombination von Hard- und Software verwirklicht werden. Jede Art von Rechnersystemen oder anderen Vorrichtungen, die zur Durchführung des hier beschriebenen Verfahrens angepasst ist, sind dafür geeignet. Eine typische Kombination von Hardware und Software stellt ein Allzweck-Computersystem mit einem Computerprogramm dar, das, wenn es geladen und ausgeführt wird, das Computersystem derart steuert, dass es das zuvor geschilderte Verfahren ausführt.

Das erfindungsgemäße System kann auf einem zentralen Rechner oder auf einem verteilten Rechnersystem implementiert sein, bei dem einzelne Rechnerkomponenten oder Rechner miteinander durch Datenkommunikationsstrecken verbunden sind.

In den Ansprüchen 14 bis 18 sind weitere Mittel zur Durchführung der Verfahrensansprüche aufgezeigt. Beispielsweise ist das Antwortmodul für das Erstellen sämtlicher möglicher Varianten von Datensätzen ausgebildet (Ansprüche 14 und 15), also sowohl für den Fall, dass das automatische Prüfen ein erstes Ergebnis ergibt, als auch für den Fall, dass ein zweites Ergebnis ermittelt wird. Das Verarbeitungsmodul umfasst als Kern ein Auswertemodul, das sowohl zur Ermittlung des zweiten Entscheidungswertes (Anspruch 13), als auch zur Ermittlung des dritten Entscheidungswertes (Anspruch 15) und gleichzeitig zum Ermitteln des Ergebnissignals (Anspruch 13) angepasst ist. Darüber hinaus ermittelt das Auswertemodul auch den zweiten und/oder dritten Entscheidungswert in Abhängigkeit von den Entscheidungsdaten (Anspruch 17). Nach Anspruch 18 dient ein Datenbankmodul zur Speicherung der ersten und/oder zweiten Datensätze in einer Datenbank.

Die Erfindung stellt darüber hinaus in Anspruch 19 eine Vorrichtung zur Durchführung von Kauftransaktionen in einem Rechnernetzwerk zur Verfügung. Die Vorrichtung, vorteilhafterweise in Gestalt eines digitalen Rechnersystems, umfasst dabei wenigstens eine Recheneinheit (CPU), wenigstens eine mit der Recheneinheit verbundene Speichervorrichtung zur Speicherung von Datensätzen über das Rechnemetzwerk, wenigstens eine mit der Recheneinheit verbundene Datenübertragungsvorrichtung zum Empfangen und Senden von Datensätzen und ein Computerprogrammprodukt zur Ausführung der Verfahrensschritte nach einem der Ansprüche 1 bis 12, wenn das Produkt in der Recheneinheit ausgeführt wird.

Nach der Lehre des Anspruchs 20 umfasst die Vorrichtung weiterhin einen Internetserver. Gleichzeitig erfolgt die Datenübertragung zwischen Kundenstationen und Händlerstationen über das Internet. Zur Erstellung des ersten Datensatzes greift der Kunde vozugsweise unter Verwendung einer entsprechenden Zugriffssoftware, beispielsweise eines Standard-Internet-Browsers, auf eine Intemetseite des Händlers zu, die von dem Internetserver bereitgestellt wird. Die zur Erstellung des ersten Datensatzes benötigten Transaktionsparameter werden dabei auf dem Intemetserver bereitgestellt. Auch die automatische Aufnahme von Transaktionsparameter ohne Kundenmitwirkung erfolgt während des Zugriffes des Kunden auf die Intemetseite. Zur Berechnung des aktuellen Einzel- bzw. Gesamtpreises der Kauftransaktion und/oder zur Berechnung eines Einzel- oder Gesamtpreises unter Berücksichtigung des vom Kunden angegebenen ersten Entscheidungswertes wird bei der Erstellung des ersten Datensatzes eine entsprechende Rechneranwendung, beispielsweise in Form eine Java-Applets bzw. -Servlets oder einer JavaScript-Anwendung, ausgeführt. Geschieht diese Berechnung auf der Seite des Kunden, wird der entsprechende Einzel- bzw. Gesamtpreis der Transaktion zur Kontrolle zusätzlich in der Händlerstation berechnet und mit den beim Kunden ermittelten Preisen verglichen, um Berechnungsfehler zu erkennen und Manipulationen bei der Preisberechnung vorzubeugen.

Der Zugriff auf die Internetseite erfolgt vorzugsweise über eine gesicherte und/oder verschlüsselte Datenverbindung, beispielsweise unter Verwendung des SSL-Protokolls. Kundendaten, Transaktionsdaten, insbesondere Transaktionsparameter, Kundennamen und geheime Daten, wie beispielsweise Passwörter zum Einloggen des Kunden in das Transaktionssystem, werden dadurch vor Missbrauch geschützt.

Das Empfangen und Senden von Datensätzen erfolgt also üblicherweise direkt und unmittelbar über eine Internetverbindung zwischen Händlerstation und Kundenstation, so dass sich die automatische Prüfung des ersten Datensatzes unmittelbar an die Übertragung anschliessen kann. Die Datensätze können aber auch über ein elektronisches Nachrichtensystem, wie beispielsweise einen Email-Dienst, empfangen und gesendet werden. In diesem Fall erhält der Kunde den zweiten Datensatz in einer Email. Bei einer weiteren Ausführungsform der Erfindung erfolgt die Kommunikation teilweise oder ausschliesslich über eine zwischengeschaltete Datenbank, in die Kunde und Händler Datensätze einspielen und auslesen können. Das Empfangen und Senden der Datensätze durch die Händlerstation erfolgt dann dadurch, dass die Datensätze aus einer Datenbank abgerufen werden bzw. in eine Datenbank eingespielt werden.

Die vorliegende Erfindung kann auch in einem Computerprogrammprodukt verwirklicht sein (Anspruch 21). Das Computerprogrammprodukt umfasst dabei alle Merkmale, die die Implementierung der hierin beschriebenen Verfahren ermöglichen, und die, wenn sie in ein Computersystem geladen werden, diese Verfahren ausführen können. Unter Computerprogramm oder Computerprogrammprodukt wird im vorliegenden Kontext jeder Ausdruck, in jeder Sprache, jedem Code oder jeder Notation, einer Gruppe von Befehlen verstanden, die dazu dienen, bei einem System mit Informationsverarbeitungsfähigkeit eine bestimmte Funktion auszuführen, entweder direkt oder nach einem oder beiden der folgenden Vorgänge: a) Nach Umwandlung in eine andere Sprache, einen anderen Code oder eine andere Notation; b) Wiedergabe in einer anderen Materialform.

Das Computerprogrammprodukt kann dabei zur Verwendung mit dem Rechnersystem auf einem beliebigen rechnemutzbaren Medium vorliegen. Zu solchen rechnemutzbaren Medien zählen u. a. nichtflüchtige, fest codierte (z. B. ROM) oder löschbare, elektrisch programmierbare Aufzeichnungsmedien (z. B. EEPROM) sowie aufzeichnungsfähige Schreibmedien wie Disketten, Festplattenspeicher, CDROM oder DVD. Das Computerprogrammprodukt kann auch auf Medien vom Übertragungstyp, wie etwa digitalen und analogen Übertragungsverbindungen vorliegen.

Die vorliegende Erfindung wird anhand von Ausführungsbeispielen erläutert, die anhand der Zeichnungen näher erläutert sind. Dabei zeigen:
- Fig. 1: ein Flussdiagramm eines bevorzugten Ausführungsbeispiels des erfindungsgemäßen Verfahrens,
- Fig. 2: eine schematische Darstellung der Datenstruktur eines ersten Datensatzes,
- Fig. 3: eine schematische Darstellung der Datenstruktur eines zweiten Datensatzes,
- Fig. 4: eine schematische Darstellung eines Rechnernetzwerks,
- Fig. 5: eine schematische Darstellung eines Systems nach der Erfindung, und
- Fig. 6: eine schematische Darstellung einer Vorrichtung nach der Erfindung.

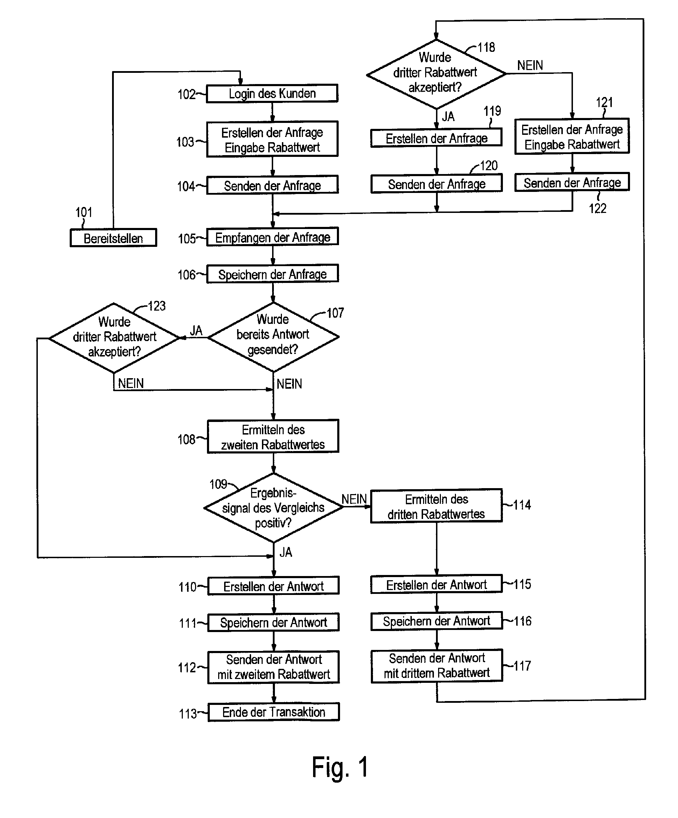

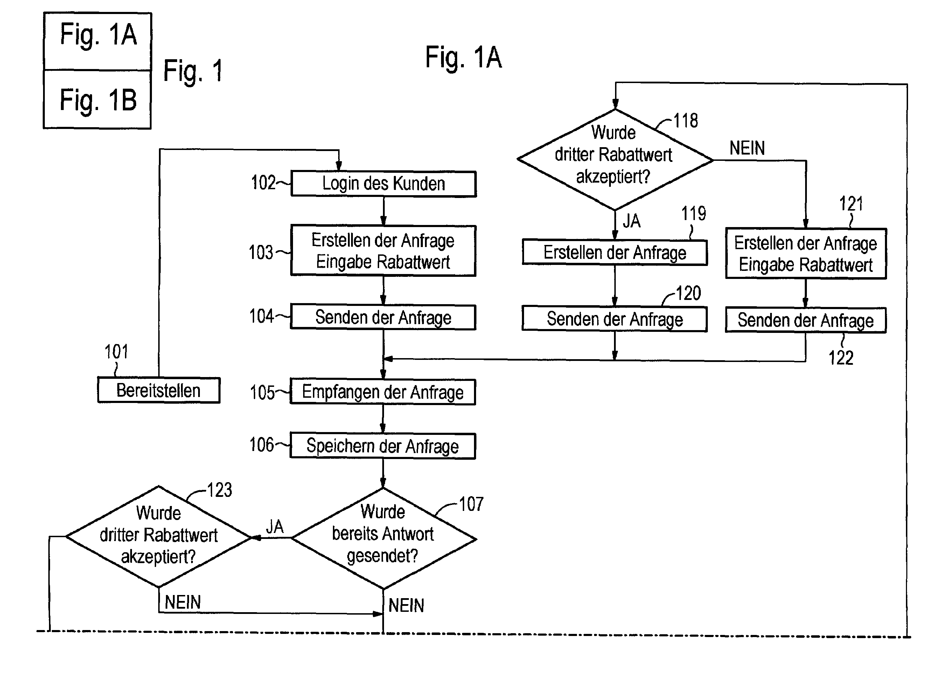

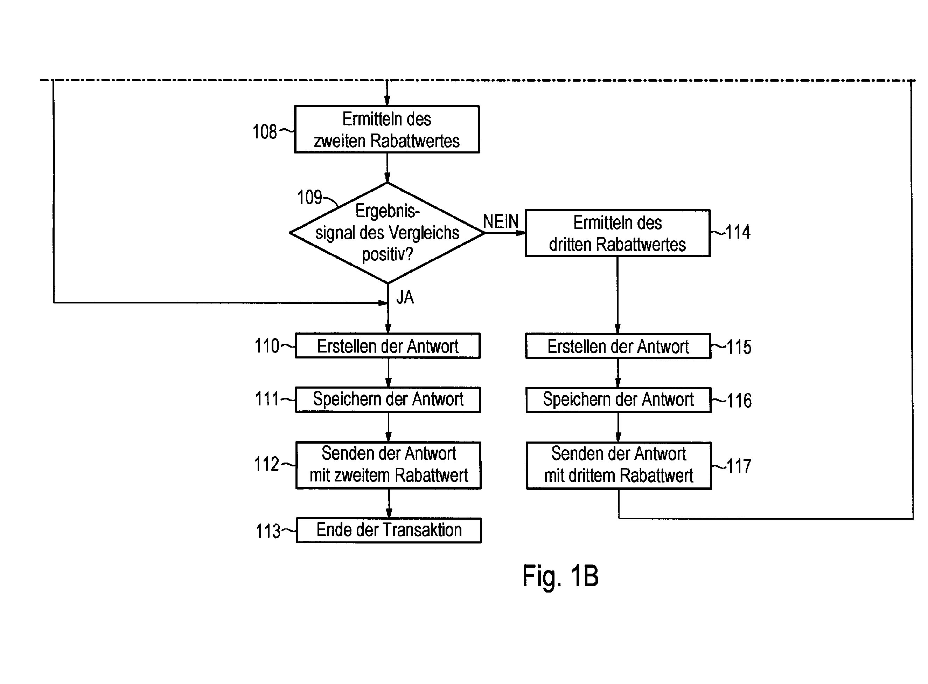

In Fig. 1 ist der Ablauf des erfindungsgemäßen Verfahrens in einem Flussdiagramm dargestellt. Dabei sind sowohl die Schritte abgebildet, die in der Einflusssphäre der Händlerstation ablaufen, als auch die Schritte, die an der Kundenstation, d.h. in der Regel durch den Kunden selbst ausgeführt werden.

Nachdem in einem ersten Schritt 101 Transaktionsdaten, also insbesondere Artikeldaten und bestimmte Transaktionsparameter zur Erstellung eines ersten Datensatzes durch die Händlerstation bereitgestellt werden, kann ein Kunde mit der Erstellung einer Kaufanfrage beginnen. In dem im folgenden geschilderten Ausführungsbeispiel erfolgt dies dadurch, dass ein Kunde auf die Internetseite eines Händlers zugreift, auf der beispielsweise in Form eines Kataloges, eine Reihe von Waren oder Dienstleistungen zum Kauf angeboten werden. Bevor der Kunde eine konkrete Anfrage zusammenstellen kann, muss er sich im System anmelden (Schritt 102). Sollte der Kunde noch nicht bei dem Händlersystem angemeldet sein, kann an dieser Stelle eine Anmeldung des Kunden beim Händlersystem vorgesehen sein. Eine solche Anmeldung umfasst zumindest die Angabe eines Kundennamens sowie einer Identifizierung, beispielsweise in Form der Angabe einer Wohnanschrift. Selbstverständlich kann es auch vorgesehen sein, dass eine Anfrage an den Händler gesendet werden kann, ohne dass sich der Kunde zuvor anmelden muss. In diesem Fall gibt der Kunden am Ende der Bestellung seine Lieferanschrift an, die im einfachsten Fall mit der Rechnungsanschrift gleichgesetzt wird.

Nach dem Anmelden des Kunden im System erfolgt in einem weiteren Schritt 103 die Auswahl der gewünschten Waren oder Dienstleistungen durch den Kunden. Gleichzeitig wird der Kunde aufgefordert, bestimmte weitere Angaben zu machen, die als Transaktionsparameter für die Erstellung des ersten Datensatzes verwendet werden. Dabei handelt es sich insbesondere um einen vom Kunden gewünschten Rabattwert und um genauere Angaben zu Art und Umfang der Lieferung sowie Lieferort und Lieferzeitpunkt. Mit dem Zusammenstellen dieser Transaktionsparameter wird also in Schritt 103 eine Anfrage erstellt, die in einem nächsten Schritt 104 als erster Datensatz versendet wird.

Dieser erste Datensatz wird in der Händlerstation im nächstfolgenden Schritt 105 empfangen und in einer Datenbank abgelegt (Schritt 106). Vorzugsweise erfolgt sogleich nach dem Eingang und dem Abspeichern des ersten Datensatzes die Bearbeitung der Kundenanfrage durch die Händlerstation. Zu diesem Zweck wird der erste Datensatz aus der Datenbank ausgelesen und dem Verarbeitungsmodul des Händlersystems zugeführt. Dort wird in einem weiteren Schritt (107) anhand der Kundennummer und bereits vorhandenen Einträgen im Datenbanksystem überprüft, ob zu der vorliegenden Kauftransaktion bereits ein Datensatz an den Kunden versendet wurde. Ist dies nicht der Fall, so wird vom Verarbeitungsmodul, genauer gesagt vom Auswertemodul, anhand der mit dem ersten Datensatz übermittelten Transaktionsparameter und weiterer Entscheidungsdaten, die zuvor aus der Datenbank ausgelesen wurden, ein zweiter Rabattwert ermittelt (Schritt 108). Im Anschluss daran erfolgt im Schritt 109 ein Vergleich des ersten Rabattwertes mit dem zweiten Rabattwert.

Stimmt der erste Rabattwert mit dem zweiten Rabattwert überein, oder ist er klei-ner als der zweite Rabattwert, so erstellt das Antwortmodul der Händlerstation in Schritt 110 einen zweiten Datensatz , der eine Bestätigung der Kauftransaktion umfasst. Die Bestätigung kann auch verschickt werden, wenn die Abweichung der beiden Rabattwerte geringer als ein vorher definierter Differenzwert ist. Dieser zweite Datensatz wird im nächsten Schritt 111 im Datenbanksystem gespeichert und anschließend an den Kunden versendet (Schritt 112). In diesem Fall umfasst der zweite Datensatz Informationen, aus denen für den Kunden hervorgeht, dass eine rechtsverbindliche Kauftransaktion abgeschlossen wurde. Die elektronische Kauftransaktion ist damit abgeschlossen (Schritt 113).

Wurde in Schritt 109 festgestellt, dass der erste Rabattwert nicht mit dem zweiten Rabattwert übereinstimmt, so wird anschließend durch das Auswertemodul ein dritter Rabattwert ermittelt (Schritt 114). Auch bei der Ermittlung dieses dritten Rabattwertes werden die Transaktionsparameter und andere Entscheidungsdaten verwendet. Im Anschluss daran wird in Schritt 115 durch das Antwortmodul ein zweiter Datensatz erstellt, der den soeben berechneten dritten Rabattwert umfasst. Auch dieser zweite Datensatz wird im Datenbanksystem abgelegt (Schritt 116) und anschließend an den Kunden versendet (Schritt 117).

Sobald der Kunde den mit dem dritten Rabattwert versehenen zweiten Datensatz empfängt, kann er prüfen (Schritt 118), ob er diesen dritten Rabattwert akzeptiert möchte. Mit anderen Worten trifft der Kunde eine Entscheidung darüber, ob der nunmehr vorliegende Rabattwert seinen Vorstellungen im Zusammenhang mit der Kauftransaktion entspricht. Ist dies der Fall, so erstellt der Kunde eine Antwort, die die Annahme des dritten Rabattwertes umfasst (Schritt 119). Diese Annahme wird in Schritt 120 als neuer erster Datensatz an die Händlerstation gesendet, wo sie nach dem Empfangen (Schritt 105) - wie oben erläutert - verarbeitet wird.

Wird der dritte Rabattwert vom Kunden nicht akzeptiert, so wird ihm die Möglichkeit bereitgestellt, seine Anfrage zu ändem. Beispielsweise kann er Art und Umfang der Ware oder Dienstleistung oder aber andere Transaktionsparameter und den ursprünglich angegebenen Rabattwert ändern. Anschließend wird mit den geänderten Daten ein neuer erster Datensatz erstellt (Schritt 121) und an die Händlerstation gesendet (Schritt 122), wo er wiederum - wie oben beschrieben - geprüft wird.

Ergibt die Überprüfung des ersten Datensatzes in Schritt 107, dass an einen Kunden bereits ein zweiter Datensatz mit einem dritten Rabattwert gesendet wurde, so wird in einem nächsten Schritt 123 geprüft, ob der zuletzt versendete dritte Rabattwert mit dem neu eingegangenen ersten Datensatz akzeptiert wurde. Ist dies der Fall, so wird vom Antwortmodul ein neuer zweiter Datensatz mit einer entsprechenden Bestätigung erstellt und anschließend an den Kunden versendet. Wurde der dritte Rabattwert vom Kunden nicht akzeptiert, so wird im Anschluss daran emeut ein zweiter Rabattwert ermittelt. Vorzugsweise wird die Anzahl der bisher durchlaufenen Transaktionszyklen und die Art und Weise der Änderungen der Rabattwerte durch den Kunden sowie der aktuelle Rabattwert selbst bei der erneuten Ermittlung des zweiten Rabattwertes berücksichtigt. Das Verfahren läuft im Anschluss daran wie oben geschildert weiter.

Das erfindungsgemäße Verfahren kann darüber hinaus vorsehen, eine Kundeninformation zu versenden, wenn nach einer festgelegten Anzahl von Wiederholungen der Verfahrensschritte das automatische Prüfen nicht das erste Ergebnis ergibt. Mit anderen Worten wird durch die Kundeninformation die Kauftransaktion beendet, wenn der Kunde beispielsweise zwanzig mal einen identischen ersten Rabattwert versendet, ohne den in den zweiten Datensätzen angegebenen dritten Rabattwert zu berücksichtigen.

Das Verfahren läuft, wenn es einmal initiiert wurde, so lange ab, bis zwischen Händlerstation und Kunde eine Einigung über einen Rabattwert erzielt wurde. Erfindungsgemäß läuft dieses Verfahren auf Händlerseite völlig selbständig und daher von subjektiven Einflüssen ungestört ab.

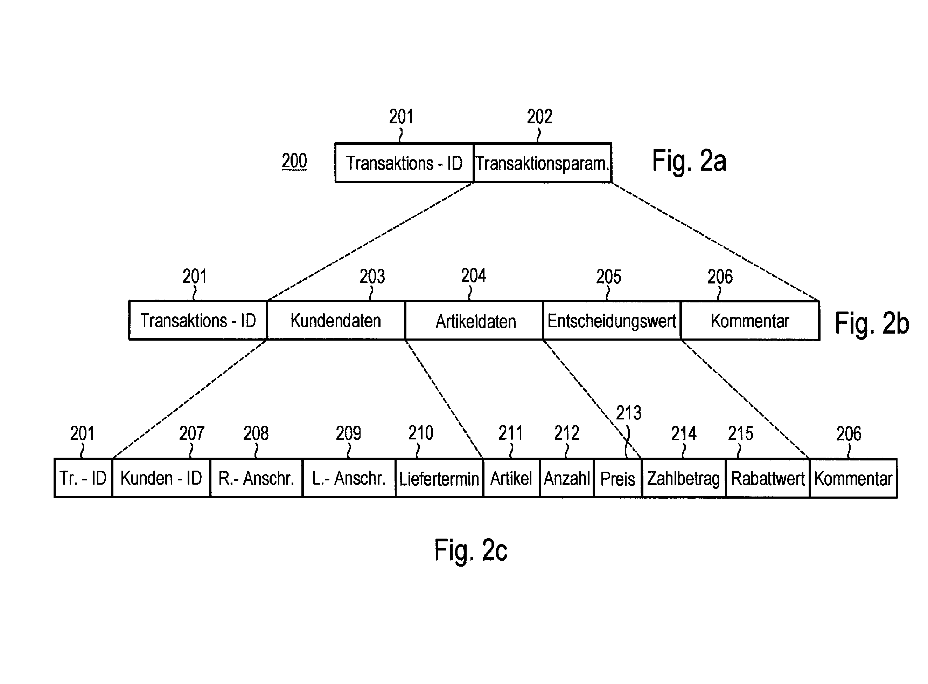

Fig. 2 zeigt eine schematische Darstellung der Datenstruktur eines ersten Datensatzes, wie er von einer Kundenstation an eine Händlerstation gesendet wird. Wie in Fig. 2a dargestellt, besteht der erste Datensatz 200 im Wesentlichen aus einer Transaktionskennzeichnung 201 und einer Anzahl von Transaktionsparametern 202. Die Transaktionsparameter 202 umfassen dabei insbesondere Kundendaten 203, Artikeldaten 204 und Entscheidungswerte 205. Wie in Fig. 2b abgebildet können die Transaktionsparameter auch einen Kommentar 206 umfassen. Dieser Kommentar 206, der vom Kunden während der Erstellung des ersten Datensatzes 200 eingegeben werden kann, wird während der automatischen Prüfung durch ein entsprechend modifiziertes Analyse- und Erkennungsmodul erfasst. Beispielsweise kann der Kunde im Kommentarfeld einen Code eingeben, der nach Art eines Gutscheines einen bestimmten Preisnachlass zur Folge hat.

In Fig. 2c ist ein erster Datensatz 200 gemäß der vorliegenden Erfindung mit all seinen Datensatzfeldem abgebildet. Insbesondere umfasssen die Kundendaten 203 dabei eine Kundenkennzeichnung 207, beispielsweise eine Kundennummer, eine oder mehrere Rechnungsanschriften 208 und Lieferanschriften 209 sowie Liefertermine 210. Die Artikeldaten 204 umfassen insbesondere Artikelbezeichnungen 211 und Artikelmengen 212 sowie die entsprechenden Preise 213 der Waren und Dienstleistungen. Der Entscheidungswert 205 wird in Form eines Rabattwertes 215 angegeben. Gleichzeitig kann der Teil- und/oder Gesamt-Zahlbetrag 214 der Kauftransaktion angegeben werden. Die Artikeldaten 204 umfassen dabei je nach Umfang der Bestellung mindestens einen Artikel. Umfasst die Bestellung mehrere Artikel, so umfasst der Datensatz 200 eine Mehrzahl von Artikeldaten 204, d. h. mehrere Artikelbezeichnungen 211 sowie die dazugehörigen Artikelmengen 212 und Preise 213. Der Zahlbetrag 214 ergibt sich dann entsprechend der Summe der einzelnen Preise 213 unter Berücksichtigung des Rabattwertes 215. Alternativ dazu kann der Datensatz 200 statt der umfangreichen Artikeldaten 204 auch eine Referenz auf eine exteme Artikelliste umfassen, wobei dann beim Sichern des Datensatzes 200 zusätzlich die externe Artikelliste abgespeichert wird.

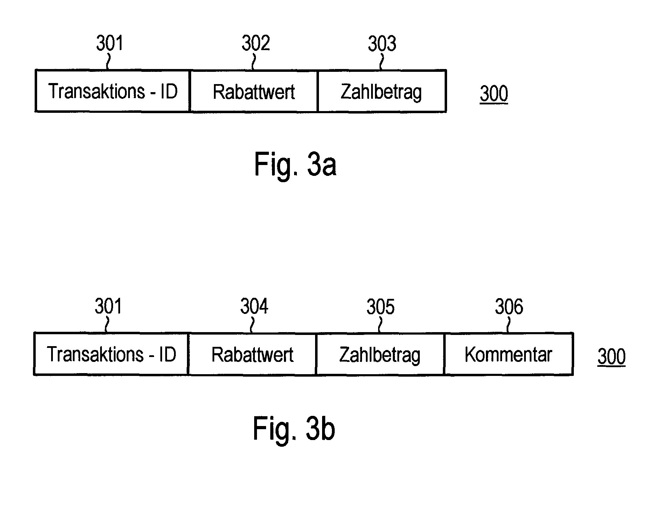

Fig. 3 umfasst die Darstellung der Datenstruktur eines zweiten Datensatzes 300. Für den Fall, dass mit dem zweiten Datensatz 300 eine Bestätigung der Kauftransaktion versendet wird, umfasst der zweite Datensatz 300 neben der Transaktionskennzeichnung 301 den nunmehr vereinbarten Rabattwert 302 für die Kauftransaktion. Daneben kann zur Bestätigung der endgültige Zahlbetrag 303 angegeben sein.

Erfolgt die Versendung des zweiten Datensatzes 300 mit einem dritten Rabattwert 304, wurde also über den Entscheidungswert noch keine Einigung erzielt, so umfasst der zweite Datensatz, wie in Fig. 3b abgebildet, neben der Transaktionskennzeichnung 301 einen neuen dritten Rabattwert 304. Wiederum kann der sich daraus ergebende aktuelle Zahlenbetrag 305 angegeben sein. In einem weiteren Feld kann der zweite Datensatz 300 einen vom Antwortmodul automatisch generierten Kommentar 306 an den Kunden umfassen. Beispielsweise kann der Kunde darin über die Gründe informiert werden, die zur Festsetzung des neuen Rabattwertes 304 geführt haben. So kann beispielsweise auf Mindestliefermengen für die Erzielung eines bestimmten Rabattwertes hingewiesen werden.

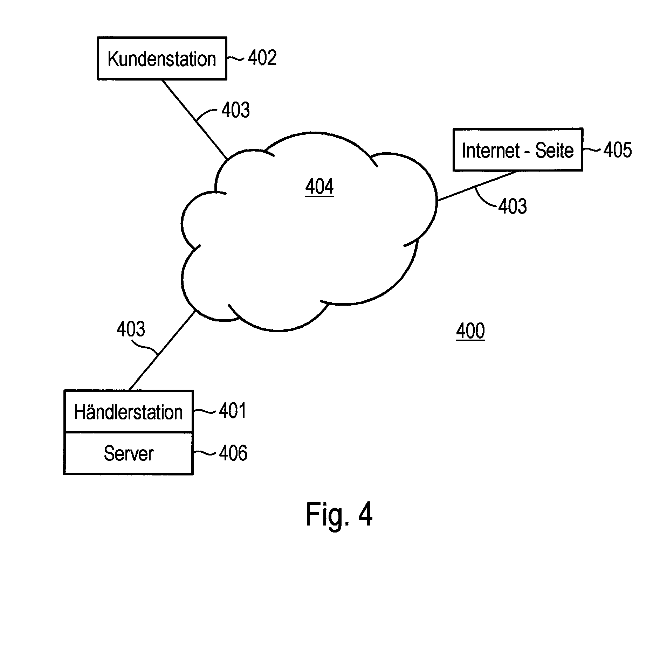

Fig. 4 stellt eine stark vereinfachte schematische Darstellung eines Rechnemetzwerkes 400 dar. Das Rechnernetzwerk 400 besteht dabei im Wesentlichen aus einem oder mehreren Händlerstationen 401 und einer Anzahl von Kundenstationen 402. Dabei sind Händerstationen 401 und Kundenstationen 402 über Kommunikationsleitungen 403 an das Internet 404 angeschlossen. Im Rechnemetzwerk 400 integriert, und von den Kundenstationen 420 mit Hilfe eines Intemet-Browsers abrufbar, sind Intemetseiten 405, die für die elektronische Abwicklung von Kauftransaktionen bereitgestellt werden. Diese Intemetseiten 405 umfassen in der Regel gleichzeitig einen Katalog von angebotenen Waren und/oder Dienstleistungen. Mit der Händlerstation 401 verbunden ist dabei ein Internetserver 406 zur Bereitstellung bzw. Versorgung der lnternetseiten mit Daten. Der Internetserver 406 kann dabei in der Händlerstation 401 integriert sein. Er kann aber auch nach Art eines verteilten Systems an einer anderen Stelle des Rechnemetzwerks 400 platziert sein.

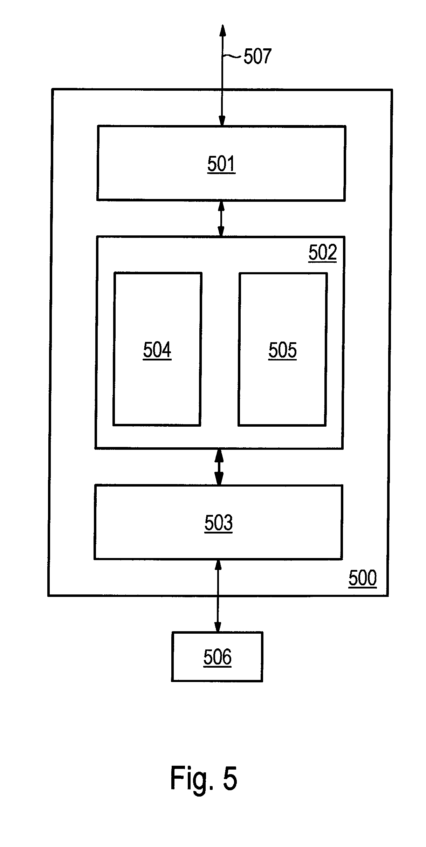

Fig. 5 zeigt ein Blockdiagramm des erfindungsgemäßen Systems 500. Zur Ausführung der Schritte des erfindungsgemäßen Verfahrens weist die Händlerstation im vorliegenden Ausführungsbeispiel ein Kommunikationsmodul 501, ein Verarbeitungsmodul 502 und ein Datenbankmodul 503 auf. Das Verarbeitungsmodul 502 umfasst dabei sowohl ein Auswertemodul 504 als auch ein Antwortmodul 505 und ist für die Durchführung des automatischen Prüfens verantwortlich. Das Datenbankmodul 503 sorgt für das erforderliche Speichern und Auslesen von Informationen, wie beispielsweise Datensätzen und Entscheidungsdaten aus entsprechend vorgesehenen Datenbanksystemen 506. Die Datenbanksysteme 506 können dabei im System 500 oder außerhalb des Systems angeordnet sein. Das Kommunikationsmodul 501 dient der Datenübertragung über Kommunikationsleitungen 507 zwischen der Händlerstation und der Kundenstation bzw. zwischen Teilen der Händlerstation mit dem Rechnernetzwerk. Das System 500 kann zusätzlich auch ein Angebotsmodule (nicht abgebildet) umfassen, dass das Bereitstellen 101 der zur Erstellung der Kundenanfrage erforderlichen Daten steuert. Das Angebotsmodul ist dabei insbesondere dafür zuständig, Artikeldaten und Preise zu aktualisieren und anzupassen. Das Angebotsmodul ist zu diesem Zweck vorteilhafterweise mit entsprechenden Datenbanksystemen 506 verbunden.

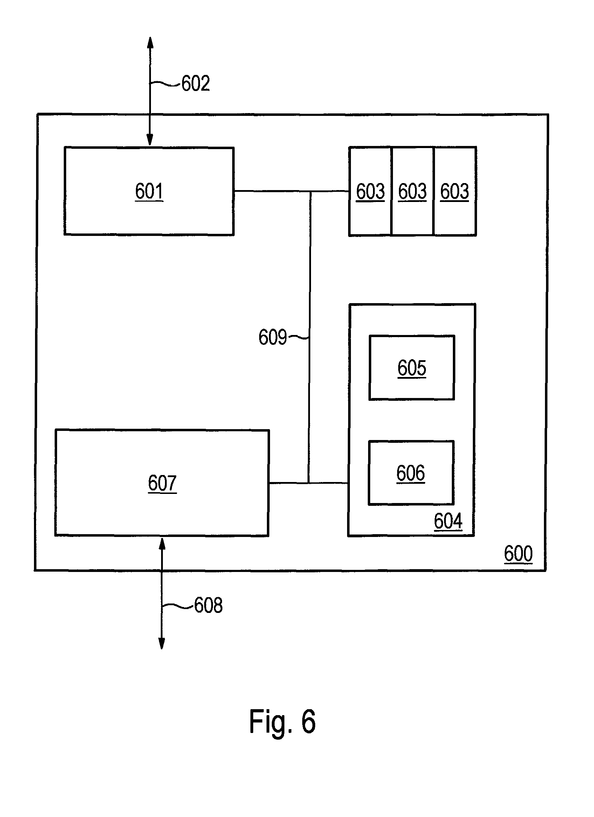

Fig. 6 zeigt schließlich eine schematische Darstellung einer Vorrichtung 600 nach der Erfindung. Die Händlerstation umfasst dabei eine Datenübertragungsvorrichtung 601 zur Übertragung von Datensätzen und weiteren Informationen. Die Datenübertragungsvorrichtung 601 ist zu diesem Zweck mittels Datenübertragunsleitungen 602 mit dem Internet und/oder anderen Rechnernetzen bzw. externen Datenbanken verbunden. Die Datenübertragungsvorrichtung 601 ist derart ausgestaltet, dass die Datenübertragung über elektrische Leitungen oder Lichtwellenleiter erfolgen kann. In einem anderen Ausführungsbeispiel kann die Übertragung der Daten auch drahtlos, beispielsweise auch über eine Infrarot-Verbindung erfolgen.

Neben der Datenübertragungsvorrichtung 601 sind eine oder mehrere Rechnereinheiten (CPU) 603 vorgesehen. Die Rechnereinheiten 603 dienen zur Ausführung sämtlicher für das Verfahren erforderlicher Programmcodes sowie zur Steuerung des Rechnersystems 600.

Weiterhin umfasst die Händlerstation eine Speichervorrichtung 604, beispielsweise einen Arbeitsspeicher (RAM) und einen Festplattenspeicher. In der Speichervorrichtung 604 ist insbesondere das die Durchführung des Verfahrens ermöglichende Computerprogrammprodukt 605 abgelegt. Darüber hinaus sind in der Speichervorrichtung 604 Daten 606, wie beispielsweise Transaktionsparameter, Entscheidungsdaten, Zwischenergebnisse der Berechnungen des Verarbeitungsmoduls und andere Daten, beispielsweise ein Betriebssystem zur Steuerung des Rechnersystems, enthalten.

Die Händlerstation umfasst weiterhin eine Benutzerschnittstelle 607. Mit einer derartigen Schnittstelle für Ein- bzw. Ausgänge können an das Rechnersystem über Datenleitungen 608 beispielsweise Eingabegeräte, wie eine Tastatur oder eine Maus, und Ausgabegeräte, wie beispielsweise ein Bildschirm oder ein Drukker, angeschlossen werden.

Sämtliche Elemente des Rechnersystems sind untereinander durch einen Systembus 609 verbunden. Der Systembus dient 609 dabei der Übertragung der Daten innerhalb des Rechnersystems 600.

### Bezugszeichenliste

- 101-122: Schritte des erfindungsgemäßen Verfahrens
- 200: Datenstruktur des ersten Datensatzes
- 201: Transaktionskennzeichnung
- 202: Transaktionsparameter
- 203: Kundendaten
- 204: Artikeldaten
- 205: Entscheidungswert
- 206: Kommentar
- 207: Kundenkennzeichnung
- 208: Rechnungsanschrift
- 209: Lieferanschrift
- 210: Liefertermin
- 211: Artikel
- 212: Anzahl
- 213: Preis
- 214: Zahlbetrag
- 215: Rabattwert
- 300: Datenstruktur des zweiten Datensatzes
- 301: Transaktionskennzeichnung
- 302: bestätigter Rabattwert
- 303: Zahlbetrag
- 304: neuer Rabattwert
- 305: Zahlbetrag
- 306: Kommentar
- 400: Rechnernetzwerk
- 401: Händlerstation
- 402: Kundenstation
- 403: Datenleitung
- 404: Internet
- 405: Internet-Seite
- 406: Server
- 500: System
- 501: Kommunikationsmodul
- 502: Verarbeitungsmodul
- 503: Datenbankmodul
- 504: Auswertemodul
- 505: Antwortmodul
- 506: Datenbank
- 507: Kommunikationsleitung
- 600: Vorrichtung
- 601: Übertragungsvorrichtung
- 602: Kommunikationsleitung
- 603: Recheneinheit
- 604: Speichervorrichtung
- 605: Computerprogrammprodukt
- 606: Daten
- 607: Benutzerschnittstelle
- 608: Datenleitung
- 609: Systembus

## Patentansprüche

1. Verfahren zur Durchführung von Kauftransaktionen in einem Rechnernetzwerk (400), mit den Schritten:
a) Empfangen (105) eines ersten Datensatzes (200) über das Rechnernetzwerk (400), der eine Anzahl von Transaktionsparametern (202) einschliesslich eines ersten Entscheidungswertes (205) umfasst,
b) automatisches Prüfen des ersten Datensatzes (200), umfassend das Ermitteln (108) eines zweiten Entscheidungswertes unter Verwendung der Transaktionsparameter (202) des ersten Datensatzes (200) sowie Ermitteln (109) eines Ergebnissignals aus einem Vergleich des ersten Entscheidungswertes (205) mit dem zweiten Entscheidungswert,
c) Erstellen (110) eines zweiten Datensatzes (300), dessen Inhalt von dem Ergebnissignal abhängt, und
d) Senden (112) des zweiten Datensatzes (300) über das Rechnernetzwerk (400).

2. Verfahren nach Anspruch 1,
**dadurch gekennzeichnet,**
**dass**, wenn das automatische Prüfen (108,109) ein erstes Ergebnissignal ergibt, der zweite Datensatz (300) eine Bestätigung der Kauftransaktion umfasst.

3. Verfahren nach Anspruch 1 oder 2,
**gekennzeichnet durch**,
wenn das automatische Prüfen (108, 109) ein zweites Ergebnissignal ergibt, den weiteren Schritt:
e) Ermitteln (114) eines dritten Entscheidungswertes (304) aus dem Ergebnis des Vergleiches und/oder den Transaktionsparametern (202) des ersten Datensatzes (200),
wobei der zweite Datensatzes (200) den dritten Entscheidungswert (304) umfasst.

4. Verfahren nach einem der Ansprüche 1 bis 3,
**gekennzeichnet durch** die weiteren Schritte:
f) Speichem (106,111) des ersten und/oder zweiten Datensatzes (200, 300) in einer Datenbank (506).

5. Verfahren nach einem der Ansprüche 1 bis 4,
**dadurch gekennzeichnet,**
**dass** das Ermitteln (108, 114) des zweiten und/oder dritten Entscheidungswertes (304) zusätzlich in Abhängigkeit von Entscheidungsdaten erfolgt, die vor dem Empfangen (105) des ersten Datensatzes (200) erfasst und in einer Datenbank (506) gespeichert wurden.

6. Verfahren nach Anspruch 5,
**dadurch gekennzeichnet,**
**dass** die Entscheidungsdaten die Inhalte von ersten und/oder zweiten Datensätzen (200, 300) umfassen.

7. Verfahren nach einem der Ansprüche 1 bis 6,
**dadurch gekennzeichnet,**
**dass** der erste Datensatz (200) eine Identifizierung (201) der Kauftransaktion umfasst.

8. Verfahren nach einem der Ansprüche 1 bis 7,
**dadurch gekennzeichnet,**
**dass** die Transaktionsparameter (202) Kundendaten (203), insbesondere eine Kennzeichnung des Kunden (207), umfassen.

9. Verfahren nach einem der Ansprüche 1 bis 8,
**dadurch gekennzeichnet,**
**dass** die Transaktionsparameter (202) einen Lieferzeitpunkt (210) und/oder einen Lieferort (209) umfassen.

10. Verfahren nach einem der Ansprüche 1 bis 9,
**dadurch gekennzeichnet,**
**dass** die Transaktionsparameter (202) Artikeldaten (204), insbesondere Art (211) und Anzahl (212) der Artikel umfassen.

11. Verfahren nach einem der Ansprüche 1 bis 10,
**gekennzeichnet durch** den weiteren Schritt:
g) Bereitstellen (101) von Transaktionsparametern (202) zum Erstellen des ersten Datensatzes (200).

12. Verfahren nach einem der Ansprüche 1 bis 11,
**dadurch gekennzeichnet,**
**dass** der Entscheidungswert (205) ein Rabattwert ist.

13. System (500) zur Durchführung von Kauftransaktionen in einem Rechnernetzwerk (400) umfassend
• Mittel (501) zum Empfangen eines ersten Datensatzes (200) über das Rechnernetzwerk (400), der eine Anzahl von Transaktionsparametern (202) einschliesslich eines ersten Entscheidungswertes (205) umfasst,
• Mittel (502) zum automatischen Prüfen des ersten Datensatzes (200) umfassend Mittel (504) zum Ermitteln (108) eines zweiten Entscheidungswertes unter Verwendung der Transaktionsparameter (202) des ersten Datensatzes (200) sowie Mittel (504) zum Ermitteln (109) eines Ergebnissignals aus einem Vergleich des ersten Entscheidungswertes (205) mit dem zweiten Entscheidungswert,
• Mittel (505) zum Erstellen (110, 115) eines zweiten Datensatzes (300), dessen Inhalt von dem Ergebnissignal abhängt, und
• Mittel (501) zum Senden (112, 117) des zweiten Datensatzes (300), dessen Inhalt von dem Ergebnissignal abhängt.

14. System (500) nach Anspruch 13,
**gekennzeichnet durch**
Mittel (505) zum Erstellen (110) eines zweiten Datensatzes (300), der eine Bestätigung der Kauftransaktion umfasst, wenn das automatische Prüfen (109) ein erstes Ergebnis ergibt.

15. System (500) nach Anspruch 13 oder 14,
**gekennzeichnet durch**
• Mittel (504) zum Ermitteln (114) eines dritten Entscheidungswertes aus dem Ergebnis des Vergleiches (109) und/oder den Transaktionsparamtem des ersten Datensatzes (200), wenn das automatische Prüfen ein zweites Ergebnis ergibt, und
• Mittel (505) zum Erzeugen eines zweiten Datensatzes (300), der den dritten Entscheidungswert umfasst.

16. System (500) nach einem der Ansprüche 13 bis 15,
**gekennzeichnet durch**
Mittel (503) zum Speichern (111,116) des ersten und/oder zweiten Datensatzes (200, 300) in einer Datenbank (506).

17. System (500) nach einem der Ansprüche 13 bis 16,
**gekennzeichnet durch**
Mittel (504) zum Ermitteln (108, 114)des zweiten und/oder dritten Entscheidungswertes in Abhängigkeit von Entscheidungsdaten, die vor dem Empfangen (105) des ersten Datensatzes (200) erfasst und in einer Datenbank (506) gespeichert wurden.

18. System (500) nach einem der Ansprüche 13 bis 17,
**gekennzeichnet durch**
Mittel zum Bereitstellen von Transaktionsparametem (202) zum Erstellen des ersten Datensatzes (200).

19. Vorrichtung (600) zur Durchführung von Kauftransaktionen in einem Rechnernetzwerk (400) mit
• wenigstens einer Recheneinheit (603),
• wenigstens einer mit der Recheneinheit (603) verbundenen Speichervorrichtung (604) zur Speicherung von Datensätzen (200, 300),
• wenigstens einer mit der Recheneinheit (603) verbundenen Datenübertragungsvorrichtung (601) zum Empfangen (105) und Senden ( 112, 117) von Datensätzen (200, 300) über das Rechnernetzwerk (400), und
• einem Computerprogrammprodukt (605) zur Ausführung der Verfahrensschritte nach einem der Ansprüche 1 bis 12, wenn das Produkt in der Recheneinheit (603) ausgeführt wird.

20. Vorrichtung (600) nach Anspruch 19,
**dadurch gekennzeichnet,**
**dass** sie einen Internet-Server (406) umfasst und dass die Datenübertragung über das Internet (404) erfolgt.

21. Computerprogrammprodukt (605), das im internen Speicher (604) eines digitalen Rechners (600) gespeichert ist, enthaltend Teile von Software-Codes zur Ausführung des Verfahrens nach einem der Ansprüche 1 bis 12, wenn das Produkt auf dem Rechner (600) ausgeführt wird.
